# EUROPÄISCHE PATENTSCHRIFT

(11) **EP 2 068 088 B1**
(45) Veröffentlichungstag und Bekanntmachung des Hinweises auf die Patenterteilung: **17.06.2015**
(21) Anmeldenummer: 08020352.4
(22) Anmeldetag: 22.11.2008
(51) Int. Cl.: F24C 15/20, A47J 36/38, F16L 55/07, F24F 7/04

(54) **Kondensatsperre für eine Dunstabzugsvorrichtung zur Abführung von Abluft**
Condensate lock for a fume hood device to remove exhaust air
Barrière à condensation pour un dispositif d'aspiration de vapeur, destinée à l'évacuation d'air

(30) Priorität: 04.12.2007 DE 102007058467
(43) Veröffentlichungstag der Anmeldung: 10.06.2009
(73) Patentinhaber: Miele & Cie. KG, 33332 Gütersloh (DE)
(72) Erfinder: Baehr, Thomas, 59846 Sundern (DE); Hüster, Ingo, 59759 Arnsberg (DE); Ricke, Michael, 59757 Arnsberg (DE)

(56) Entgegenhaltungen:
- DE-A1- 19 711 709
- DE-A1- 19 912 913
- DE-A1-102005 048 986
- DE-U1- 7 912 950
- DE-U1- 9 402 193

## Beschreibung

Die Erfindung betrifft eine Kondensatsperre für eine Dunstabzugsvorrichtung zur Abführung von Abluft der im Oberbegriff des Anspruchs 1 genannten Art.

Eine derartige Kondensatsperre ist beispielsweise aus der DE 79 12 950 U1 bekannt. Die Innenwand der daraus bekannten Kondensatsperre für eine Dunstabzugsvorrichtung zur Abführung von Abluft begrenzt einen lichten Strömungsquerschnitt und weist einen Anschlussabschnitt zur strömungsleitenden Verbindung mit einem Luftkanal und einen Kondensatsammelabschnitt auf. An dem Kondensatsammelabschnitt sind eine Auffangwanne und eine Sammelschale jeweils außerhalb des lichten Strömungsquerschnitts angeordnet, wobei die Auffangwanne zur Aufnahme des an der Außenwand der Kondensatsperre herabfließenden Kondensats und die Sammelschale zur Aufnahme des an der Innenwand der Kondensatsperre herabfließenden Kondensats ausgebildet sind. Die bekannte Kondensatsperre ist strömungsleitend an eine Dunstabzugsvorrichtung ankoppelbar.

Der Erfindung stellt sich somit das Problem eine Kondensatsperre anzugeben, bei der die Abfuhr des gesammelten Kondensats durch die Abluft verbessert ist.

Erfindungsgemäß wird dieses Problem durch eine Kondensatsperre mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben der verbesserten Abfuhr des gesammelten Kondensats durch die Abluft insbesondere in einer dadurch ermöglichten kompakteren Bauweise der Kondensatsperre. Auf diese Weise kann der gesamte Aufbau, nämlich die Dunstabzugsvorrichtung, die Kondensatsperre und der Luftkanal, die gemeinsam einen Strömungskanal für die Abfuhr von Abluft bilden, platzsparender verwirklicht werden.
Im Unterschied zu der bekannten Kondensatsperre, bei der das an der Außenwand der Kondensatsperre herabfließende Kondensat nicht in Kontakt mit der durch den Strömungskanal geführten Abluft gelangt, steht die Auffangwanne der erfindungsgemäßen Kondensatsperre in Kondensatleitungsverbindung mit der dem lichten Strömungsquerschnitt der Kondensatsperre zugewandten Seite des Kondensatsammelabschnitts, was die Abfuhr des in der Auffangwanne gesammelten Kondensats durch die Abluft ermöglicht. Die Abfuhr dieses Kondensats bei der bekannten Kondensatsperre durch Verdunstung erfolgt demgegenüber deutlich langsamer, so dass die Auffangwanne der bekannten Kondensatsperre ein größeres Nutzvolumen aufweisen muss.

Zwar besteht die theoretische Möglichkeit, die Anschlussstelle zwischen Kondensatsperre und Luftkanal derart dicht auszubilden, dass auf eine Auffangwanne zum Sammeln des an der Außenwand der Kondensatsperre herabfließenden Kondensats verzichtet werden kann. Dies ist jedoch nicht praktikabel, da derartige Verbindungen von Fachpersonal und unter Verwendung von Spezialwerkzeug und -material hergestellt werden müssten. Die üblichen Verbindungen von Kondensatsperren und Luftkanälen bestehen jedoch aus gewellten Abluftschläuchen, die auf einen Anschlussabschnitt der Kondensatsperre aufgeschoben und durch eine Schlauchschelle auf dem Fachmann bekannte Weise gesichert werden. Entsprechend ist die Verbindung zwischen Luftkanal und Kondensatsperre nicht dicht, so dass üblicherweise Kondensat an der Außenwand der Kondensatsperre herablaufen kann.

Grundsätzlich ist es denkbar, dass die Sammelschale außerhalb des durch die Dunstabzugsvorrichtung, Kondensatsperre und Luftkanal gebildeten Strömungskanals angeordnet ist. Vorteilhafterweise ist die Sammelschale auf der dem lichten Strömungsquerschnitt der Kondensatsperre zugewandten Seite des Kondensatsammelabschnitts angeordnet. Hierdurch ist eine zusätzliche Kondensatleitung von der Sammelschale in das Innere des vorgenannten Strömungskanals nicht erforderlich.

Analog zu der Sammelschale ist es denkbar, auch die Auffangwanne in dem Inneren des durch die Dunstabzugsvorrichtung, Kondensatsperre und Luftkanal gebildeten Strömungskanals anzuordnen. Um eine gute Abdichtung zwischen Kondensatsperre und Dunstabzugsvorrichtung zu erzielen und gleichzeitig einen robusten und konstruktiv einfachen Aufbau der Kondensatsperre zu ermöglichen, ist die Auffangwanne auf der dem lichten Strömungsquerschnitt abgewandten Seite des Kondensatsammelabschnitts und außerhalb des durch Dunstabzugsvorrichtung, Kondensatsperre und Luftkanal gebildeten Strömungskanals angeordnet.

Eine vorteilhafte Weiterbildung der vorgenannten Ausführungsform sieht vor, dass die Kondensatleitungsverbindung derart ausgebildet ist, dass das Kondensat aus der Auffangwanne mittels der Schwerkraft in die Sammelschale gelangt. Hierdurch ist der konstruktive Aufbau weiter vereinfacht.

Eine besonders vorteilhafte Weiterbildung sieht vor, dass die Auffangwanne gleichzeitig als ein Halteabschnitt der Kondensatsperre ausgebildet ist, mittels dem die Kondensatsperre an der Dunstabzugsvorrichtung halterbar ist. Auf diese Weise ist die Anzahl der Bauteile verringert und damit die Montage der Kondensatsperre vereinfacht.

Eine weitere vorteilhafte Weiterbildung sieht vor, dass der Anschlussabschnitt an dessen dem Luftkanal zugewandten Ende eine Fase aufweist, die zu dem vorgenannten Ende hin und in Richtung der Innenwand der Kondensatsperre spitz zuläuft. Hierdurch ist zum einen die Verbindung des Luftkanals mit der Kondensatsperre vereinfacht. Zum anderen wirkt die Fase für das an dem Luftkanal herabfließende Kondensat als eine Art Strömungsleitelement, durch dessen konstruktive Ausgestaltung und Dimensionierung das Kondensat in gewünschter Weise auf Sammelschale und Auffangwanne aufgeteilt werden kann. Auf diese Weise ist die Dimensionierung der Auffangwanne und der Sammelschale in weiten Grenzen ermöglicht.

Eine andere vorteilhafte Weiterbildung sieht vor, dass der Kondensatsammelabschnitt an dessen der Dunstabzugsvorrichtung zugewandten Ende eine Fase aufweist, die zu dem vorgenannten Ende hin und in Richtung der Außenwand der Kondensatsperre spitz zuläuft. Hierdurch ist ähnlich zu der vorgenannten Ausführungsform eine Strömungsleitung des Kondensats, beispielsweise in eine in radialer Richtung weiter außen liegende Sammelschale, ermöglicht. Auf diese Weise kann die Sammelschale ohne Nachteil für deren Funktion außerhalb des lichten Strömungsquerschnitts angeordnet werden.

In einer weiteren vorteilhaften Weiterbildung weist das umlaufende Profil der Kondensatsperre einen L-förmigen Querschnitt auf, wobei der Längsschenkel des Profils im Wesentlichen durch den Anschlussabschnitt gebildet ist, von dem sich radial nach Außen zumindest ein Querschenkel erstreckt, der durch die Auffangwanne oder durch die Sammelschale gebildet ist. Hierdurch ist die Geometrie der Kondensatsperre und damit deren konstruktiver Aufbau weiter vereinfacht.

Eine vorteilhafte Weiterbildung der vorgenannten Ausführungsform sieht vor, dass sich von dem Längsschenkel radial nach Außen und in Längsrichtung der Kondensatsperre beabstandet zwei durch die Auffangwanne und die Sammelschale gebildete Querschenkel erstrecken. Auf diese Weise ist es möglich, die Kondensatsperre einstückig auszubilden, so dass die Kondensatsperre beispielsweise als ein einstückiges Kunststoffteil hergestellt werden kann.

Eine andere Weiterbildung sieht vor, dass die Kondensatsperre mehrteilig ausgebildet ist. Auf diese Weise ist die Anordnung der Kondensatsperre relativ zu der Dunstabzugsvorrichtung in weiten geeigneten Grenzen frei wählbar. Beispielsweise die Anordnung der Sammelschale und/oder der Auffangwanne.

Ferner sieht eine vorteilhafte Weiterbildung der vorgenannten Ausführungsform vor, dass die Sammelschale integraler Bestandteil der Dunstabzugsvorrichtung ist und der Rest der Kondensatsperre eine bauliche Einheit bildet. Hierdurch kann der konstruktive Aufbau der Sammelschale und des Rests der Kondensatsperre vereinfacht werden.

Ein Ausführungsbeispiel der Erfindung ist in den Zeichnungen rein schematisch dargestellt und wird nachfolgend näher beschrieben. Es zeigt
- Figur 1: eine Dunstabzugsvorrichtung mit einer erfindungsgemäßen Kondensatsperre in einer perspektivischen Darstellung,
- Figur 2: die Dunstabzugsvorrichtung aus Fig. 1 in teilweise ausgebrochener Darstellung,
- Figur 3: eine geschnittene Detailansicht im Bereich der Kondensatsperre in teilweiser Darstellung,
- Figur 4: den in Fig. 3 markierten Bereich in einer nochmals vergrößerten Schnittansicht und
- Figur 5: eine ähnliche Ansicht wie in Fig. 4, mit eingezeichneten Strömungspfeilen.

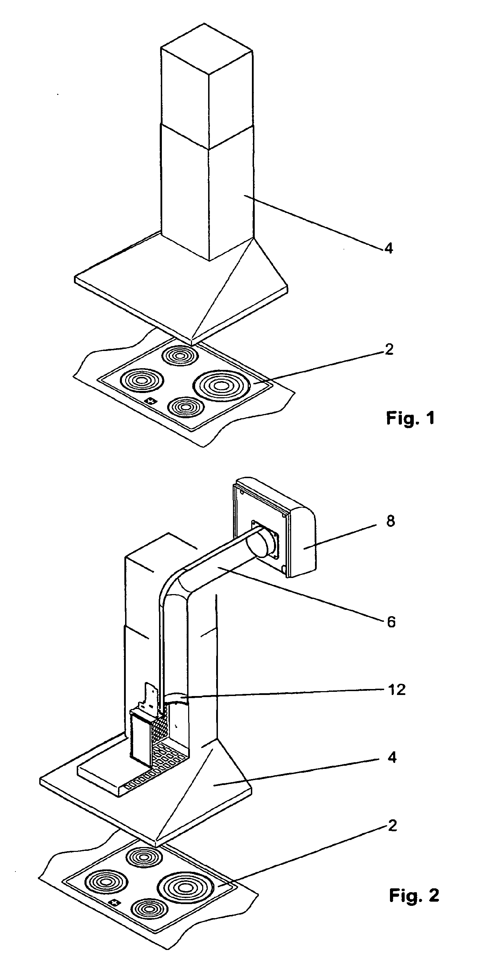

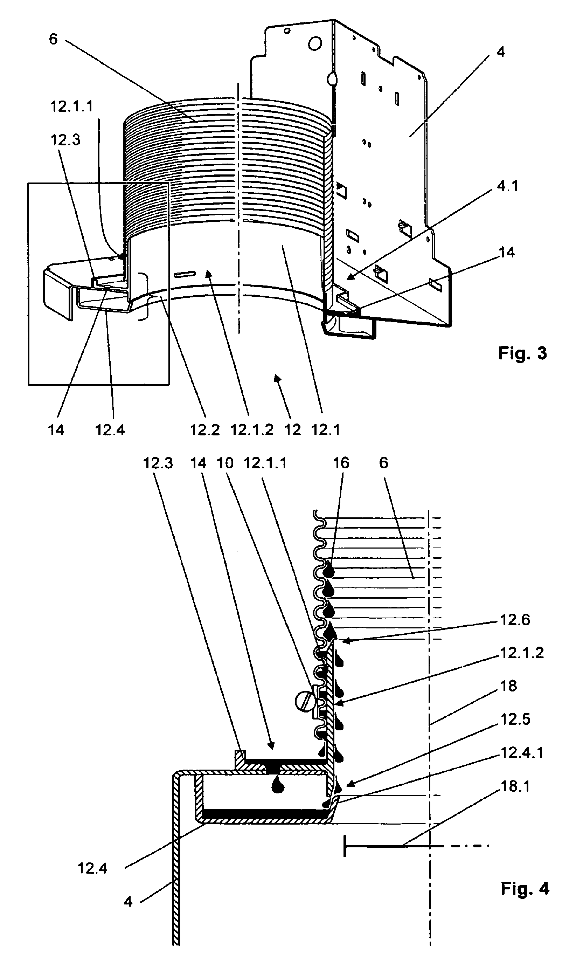

Fig. 1 zeigt eine über einem Kochfeld 2 angeordnete Dunstabzugsvorrichtung 4. Bei der Dunstabzugsvorrichtung 4 handelt es sich um eine wandmontierte Küchendunstabzugshaube, die über einen Luftkanal 6 mit einem Außenwandgebläse 8 in Luftleitverbindung steht. Siehe hierzu Fig. 2. Der Luftkanal 6 ist in an sich bekannter Weise als ein flexibler Schlauch ausgebildet, was aus den Fig. 3 bis 5 näher ersichtlich ist. Der vertikal verlaufende Abschnitt des Luftkanals 6 ist auf dem Fachmann bekannte Weise, nämlich über eine in Fig. 4 dargestellte Schlauchschelle 10 mit einer Kondensatsperre 12, nämlich mit deren Anschlussabschnitt 12.1 verbunden. Die Kondensatsperre 12 ist in den Fig. 3 bis 5 im Detail dargestellt und wird nachfolgend näher erläutert.

Die Kondensatsperre 12 ist hier zweiteilig ausgebildet. Das erste Teil ist im Wesentlichen aus einem rohrförmigen Anschlussabschnitt 12.1 gebildet, auf den in an sich bekannte Weise der Luftkanal 6 aufgesteckt werden kann. Siehe Fig. 3. An den Anschlussabschnitt 12.1 schließt sich in Richtung der Dunstabzugsvorrichtung 4 übergangslos ein Kondensatsammelabschnitt 12.2 an; der Kondensatsammelabschnitt 12.2 weist eine Auffangwanne 12.3 zur Aufnahme des an der Außenwand 12.1.1 der Kondensatsperre 12 herabfließenden Kondensats auf. Dabei ist der erste Teil der Kondensatsperre 12 als ein umlaufendes Profil mit einem L-förmigen Querschnitt ausgebildet, wobei der Längsschenkel hier im Wesentlichen durch den Anschlussabschnitt 12.1 und der Querschenkel durch die Auffangwanne gebildet ist. Siehe hierzu auch Fig. 4. Der erste Teil ist hier als ein Kunststoffteil ausgebildet.

Der zweite Teil der Kondensatsperre 12 ist durch eine Sammelschale 12.4 gebildet, die hier als ein integraler Bestandteil der Dunstabzugsvorrichtung 4 ausgebildet ist. Die Sammelschale 12.4 ist zur Aufnahme des an der Innenwand 12.1.2 herabfließenden Kondensats ausgebildet. Entsprechend der Dunstabzugsvorrichtung 4 ist auch die Sammelschale 12.4 als ein umlaufendes Blechteil ausgebildet, das die Öffnung 4.1 umfasst. Der Kondensatsammelabschnitt 12.2 der Kondensatsperre 12 besteht somit aus der Auffangwanne 12.3 des ersten Teils und der Sammelschale 12.4 die den zweiten Teil der Kondensatsperre 12 bildet.

Für die Montage wird der erste Teil der Kondensatsperre 12 mittels der Schlauchschelle 10 zuerst mit dem Luftkanal 6 strömungsleitend verbunden und anschließend in eine Öffnung 4.1 der Dunstabzugsvorrichtung 4 von oben eingesteckt. Somit dient die Auffangwanne 12.3 hier gleichzeitig als ein Halteabschnitt der Kondensatsperre 12, die sich über die der Dunstabzugsvorrichtung 4 zugewandte Unterseite der Auffangwanne 12.3 an der Dunstabzugsvorrichtung 4 abstützt. Der zweite Teil der Kondensatsperre 12, nämlich die Sammelschale 12.4 ist, wie bereits erläutert, fest mit der Dunstabzugsvorrichtung 4, beispielsweise durch Löten oder dergleichen, verbunden.

Wie insbesondere aus Fig. 4 hervorgeht, sind die Auffangwanne 12.3 und die Sammelschale 12.4 über eine als Bohrungen in der Auffangwanne 12.3 und dazu korrespondierenden Bohrungen in der Dunstabzugsvorrichtung 4 ausgebildete Kondensatleitungsverbindung 14 miteinander kondensatübertragend verbunden. Die Bohrungen sind hier gleichmäßig über den Umfang der umlaufenden Auffangwanne 12.3 verteilt. Auf diese Weise kann das mit der Auffangwanne 12.3 aufgefangene Kondensat, in Fig. 4 durch Tröpfchen 16 symbolisiert, aufgrund der Wirkung der Schwerkraft selbsttätig aus der Auffangwanne 12.3 über die Kondensatleitungsverbindung 14 in die Sammelschale 12.4 abfließen. Wie aus Fig. 4 ebenfalls deutlich hervorgeht, gelangt das Kondensat 16 über die Innenwand 12.1.2 teilweise direkt in die Sammelschale 12.4. Hierfür weist der Kondensatsammelabschnitt 12.2 an dessen der Dunstabzugsvorrichtung 4 zugewandten Ende eine Fase 12.5 auf, die zu dem vorgenannten Ende hin und in Richtung der Außenwand 12.1.1 der Kondensatsperre 12 spitz zuläuft. Zum anderen springt ein Rand 12.4.1 der Sammelschale 12.4 derart weit radial nach Innen in Richtung Zentrum des durch die Dunstabzugsvorrichtung 4, die Kondensatsperre 12 und den Luftkanal 6 gebildeten Strömungskanals 18, dass das an der Innenwand 12.1.2 herablaufende und durch die Fase 12.5 geführte Kondensat 16 sicher in die Sammelschale 12.4 geleitet wird.

Ferner weist der Anschlussabschnitt 12.1 an dessen dem Luftkanal 6 zugewandten Ende eine Fase 12.6 auf, die zu dem vorgenannten Ende hin und in Richtung der Innenwand 12.1.2 der Kondensatsperre 12 spitz zuläuft. Auf diese Weise ist zum einen das Verbinden des Luftkanals 6 mit der Kondensatsperre 12 erleichtert. Zum anderen wird der Strom des an dem Luftkanal 6 herablaufenden Kondensats 16 gezielt aufgeteilt, so dass die Nutzvolumina der Auffangwanne 12.3 und der Sammelschale 12.4 entsprechend dimensioniert werden können.

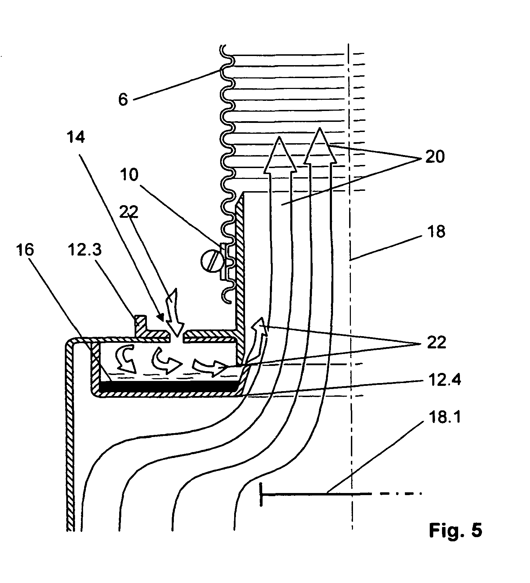

Da die Sammelschale 12.4 hier innerhalb des Strömungskanals 18 angeordnet ist und damit das darin gesammelte Kondensat 16 in direktem Kontakt mit der durch den Strömungskanal 18 geführten Abluft steht, wird das Kondensat 16 bei Betrieb der Dunstabzugsvorrichtung 4 von der durch den Strömungskanal 18 strömenden Abluft mitgerissen und letztlich aus dem Strömungskanal 18 ausgetragen. Siehe hierzu insbesondere die Fig. 5, in der die in dem Strömungskanal 18 strömende Abluft durch Pfeile 20 symbolisiert ist. Dabei wird Umgebungsluft durch die leere Auffangwanne 12.3 und die Kondensatleitungsverbindung 14 über die Oberfläche des in der Sammelschale 12.4 gesammelten Kondensats 16 geführt, so dass dadurch das Kondensat 16 aus der Sammelschale 12.4 in den Abluftstrom 20 transportiert und von diesem ausgetragen wird. Die Strömung der Umgebungsluft ist in Fig. 5 durch Pfeile 22 symbolisiert.

Wie aus den Fig. 1 bis 5 deutlich ersichtlich ist, sind sowohl die Auffangwanne 12.3 wie auch die Sammelwanne 12.4 außerhalb des lichten Strömungsquerschnitt 18.1 angeordnet.

Alternativ zu dem vorgenannten Ausführungsbeispiel ist es auch denkbar, dass die Sammelschale auf der dem lichten Strömungsquerschnitt der Kondensatsperre zugewandten Seite des Kondensatsammelabschnitts angeordnet ist. Allerdings wird durch diese Anordnung der lichte Strömungsquerschnitt verengt. Auch ist es möglich, die Kondensatsperre einstückig auszubilden. Beispielsweise dadurch, dass sich von dem im Wesentlichen durch den Anschlussabschnitt 12.1 gebildeten Längsschenkel radial nach Außen und in Längsrichtung der Kondensatsperre beabstandet zwei durch die Auffangwanne und die Sammelschale gebildete Querschenkel erstrecken. Die Sammelschale kann beispielsweise über zwischen dem Rand der Sammelschale und dem benachbarten Ende des Kondensatsammelabschnitts angeordnete Verbindungsstege fest mit dem Rest der Kondensatsperre verbunden sein. Ferner ist es möglich, die erfindungsgemäße Kondensatsperre auch bei anderen Haushaltsgeräten vorteilhaft einzusetzen, bei denen feuchtigkeitsbeladene Abluft über einen Luftkanal abgeführt werden muss. Beispielsweise wäre ein Einsatz bei Waschmaschinen, Wäschetrocknern, Geschirrspülmaschinen oder dergleichen möglich.

## Patentansprüche

1. Kondensatsperre (12) für eine Dunstabzugsvorrichtung (4) zur Abführung von Abluft (20), deren Innenwand (12.1.2) einen lichten Strömungsquerschnitt (18.1) begrenzt, mit einem Anschlussabschnitt (12.1) zur strömungsleitenden Verbindung mit einem Luftkanal (6) und einem Kondensatsammelabschnitt (12.2), der eine Auffangwanne (12.3) zur Aufnahme des an der Außenwand (12.1.1) der Kondensatsperre (12) herabfließenden Kondensats (16) und eine Sammelschale (12.4) zur Aufnahme des an der Innenwand (12.1.2) der Kondensatsperre (12) herabfließenden Kondensats (16) aufweist und an die Dunstabzugsvorrichtung (4) strömungsleitend ankoppelbar ist, wobei die Auffangwanne (12.3) und die Sammelschale (12.4) jeweils außerhalb des lichten Strömungsquerschnitts (18.1) an dem Kondensatsammelabschnitt (12.2) angeordnet sind,
**dadurch gekennzeichnet,**
**dass** die Auffangwanne (12.3) in Kondensatleitungsverbindung (14) mit der dem lichten Strömungsquerschnitt (18.1) der Kondensatsperre (12) zugewandten Seite des Kondensatsammelabschnitts (12.2) steht.

2. Kondensatsperre (12) nach Anspruch 1,
**dadurch gekennzeichnet,**
**dass** die Sammelschale (12.4) auf der dem lichten Strömungsquerschnitt (18.1) der Kondensatsperre (12) zugewandten Seite des Kondensatsammelabschnitts (12.2) angeordnet ist.

3. Kondensatsperre (12) nach Anspruch 1 oder 2,
**dadurch gekennzeichnet,**
**dass** die Auffangwanne (12.3) auf der dem lichten Strömungsquerschnitt (18.1) abgewandten Seite des Kondensatsammelabschnitts (12.2) und außerhalb des durch Dunstabzugsvorrichtung (4), Kondensatsperre (12) und Luftkanal (6) gebildeten Strömungskanals (18) angeordnet ist.

4. Kondensatsperre (12) nach Anspruch 3,
**dadurch gekennzeichnet,**
**dass** die Kondensatleitungsverbindung (14) derart ausgebildet ist, dass das Kondensat (16) aus der Auffangwanne (12.3) mittels der Schwerkraft in die Sammelschale (12.4) gelangt.

5. Kondensatsperre (12) nach einem der Ansprüche 1 bis 4,
**dadurch gekennzeichnet,**
**dass** die Auffangwanne (12.3) gleichzeitig als ein Halteabschnitt der Kondensatsperre (12) ausgebildet ist, mittels dem die Kondensatsperre (12) an der Dunstabzugsvorrichtung (4) halterbar ist.

6. Kondensatsperre (12) nach mindestens einem der Ansprüche 1 bis 5,
**dadurch gekennzeichnet,**
**dass** der Anschlussabschnitt (12.1) an dessen dem Luftkanal (6) zugewandten Ende eine Fase (12.6) aufweist, die zu dem vorgenannten Ende hin und in Richtung der Innenwand (12.1.2) der Kondensatsperre (12) spitz zuläuft.

7. Kondensatsperre (12) nach mindestens einem der Ansprüche 1 bis 6,
**dadurch gekennzeichnet,**
**dass** der Kondensatsammelabschnitt (12.2) an dessen der Dunstabzugsvorrichtung (4) zugewandten Ende eine Fase (12.5) aufweist, die zu dem vorgenannten Ende hin und in Richtung der Außenwand (12.1.1) der Kondensatsperre (12) spitz zuläuft.

8. Kondensatsperre (12) nach mindestens einem der Ansprüche 1 bis 7,
**dadurch gekennzeichnet,**
**dass** das umlaufende Profil der Kondensatsperre (12) einen L-förmigen Querschnitt aufweist, wobei der Längsschenkel des Profils im Wesentlichen durch den Anschlussabschnitt (12.1) gebildet ist, von dem sich radial nach Außen zumindest ein Querschenkel erstreckt, der durch die Auffangwanne (12.3) oder durch die Sammelschale (12.4) gebildet ist.

9. Kondensatsperre (12) nach Anspruch 8,
**dadurch gekennzeichnet,**
**dass** sich von dem Längsschenkel (12.1, 12.2) radial nach Außen und in Längsrichtung der Kondensatsperre (12) beabstandet zwei durch die Auffangwanne (12.3) und die Sammelschale (12.4) gebildete Querschenkel erstrecken.

10. Kondensatsperre (12) nach mindestens einem der Ansprüche 1 bis 9,
**dadurch gekennzeichnet,**
**dass** die Kondensatsperre (12) mehrteilig ausgebildet ist.

11. Dunstabzugsvorrichtung (4) mit einer Kondensatsperre (12) nach Anspruch 10, rückbezogen auf einen der Ansprüche 1 bis 8,
**dadurch gekennzeichnet,**
**dass** die Sammelschale (12.4) integraler Bestandteil der Dunstabzugsvorrichtung (4) ist und der Rest der Kondensatsperre (12) eine bauliche Einheit bildet.

## Claims

1. Condensate trap (12) for an extractor hood device (4) for discharging exhaust air (20), the inner wall (12.1.2) of which limits an clear flow cross section (18.1) and said condensate trap comprising a connecting portion (12.1) for connection, in a flow-conducting manner, to an air duct (6) and a condensate collecting portion (12.2) which comprises a catch trough (12.3) for receiving the condensate (16) flowing down the outer wall (12.1.1) of the condensate trap (12) and a collecting tray (12.4) for receiving the condensate (16) flowing down the inner wall (12.1.2) of the condensate trap (12), and can be coupled to the extractor hood device (4) in a flow-conducting manner, the catch trough (12.3) and the collecting tray (12.4) each being arranged on the condensate collecting portion (12.2), outside the clear flow cross section (18.1),
**characterised in that**
the catch trough (12.3) is connected (14) in a condensate-conducting manner to the side of the condensate collecting portion (12.2) which faces the clear flow cross section (18.1) of the condensate trap (12).

2. Condensate trap (12) according to claim 1,
**characterised in that**
the collecting tray (12.4) is arranged on the side of the condensate collecting portion (12.2) which faces the clear flow cross section (18.1) of the condensate trap (12).

3. Condensate trap (12) according to either claim 1 or claim 2, **characterised in that** the catch trough (12.3) is arranged both on the side of the condensate collecting portion (12.2) facing away from the clear flow cross section (18.1) and outside the flow passage (18) formed by the extractor hood device (4), condensate trap (12) and air duct (6).

4. Condensate trap (12) according to claim 3,
**characterised in that**
the condensate-conducting connection (14) is designed such that the condensate (16) enters the collecting tray (12.4) from the catch trough (12.3) by means of gravity.

5. Condensate trap (12) according to any of claims 1 to 4,
**characterised in that**
the catch trough (12.3) is also designed as a retaining portion for the condensate trap (12), by means of which the condensate trap (12) can be retained on the extractor hood device (4).

6. Condensate trap (12) according to at least one of claims 1 to 5,
**characterised in that**
the end of the connecting portion (12.1) which faces the air duct (6) has a chamfer (12.6), which tapers off towards said end, in the direction of the inner wall (12.1.2) of the condensate trap (12).

7. Condensate trap (12) according to at least one of claims 1 to 6,
**characterised in that**
the end of the condensate collecting portion (12.2) which faces the extractor hood device (4) has a chamfer (12.5) which tapers off towards said end, in the direction of the outer wall (12.1.1) of the condensate trap (12).

8. Condensate trap (12) according to at least one of claims 1 to 7,
**characterised in that**
the peripheral profile of the condensate trap (12) has an L-shaped cross section, the longitudinal legs of the profile being substantially formed by the connecting portion (12.1), from which at least one transverse leg, which is formed by the catch trough (12.3) or by the collecting tray (12.4), extends radially outwards.

9. Condensate trap (12) according to claim 8,
**characterised in that**
two transverse legs formed by the catch trough (12.3) and the collecting tray (12.4) extend radially outwards from the longitudinal leg (12.1, 12.2) and so as to be spaced apart in the longitudinal direction of the condensate trap (12).

10. Condensate trap (12) according to at least one of claims 1 to 9,
**characterised in that**
the condensate trap (12) consists of several parts.

11. Extractor hood device (4) comprising a condensate trap (12) according to claim 10, with reference to any of claims 1 to 8,
**characterised in that**
the collecting tray (12.4) is an integral component of the extractor hood device (4) and the rest of the condensate trap (12) forms a structural unit.

## Revendications

1. Barrière de condensat (12) pour un dispositif d'aspiration des buées (4) destiné à l'évacuation de l'air d'échappement (20), dont la paroi intérieure (12.1.2) limite une section transversale d'écoulement (18.1) libre, avec un tronçon de jonction (12.1) pour le raccordement en relation d'écoulement à un canal d'air (6) et avec un tronçon collecteur de condensat (12.2) qui présente une cuvette de récupération (12.3) pour la réception du condensat (16) qui descend sur la paroi extérieure (12.1.1) de la barrière de condensat (12) et un bac collecteur (12.4) pour la réception du condensat (16) qui descend sur la paroi intérieure (12.1.2) de la barrière de condensat (12) et qui peut être couplé en relation d'écoulement au dispositif d'aspiration des buées (4), la cuvette de récupération (12.3) et le bac collecteur (12.4) étant respectivement disposés à l'extérieur de la section transversale d'écoulement (18.1) libre sur le tronçon collecteur de condensat (12.2),
**caractérisée en ce que**
la cuvette de récupération (12.3) est en raccordement de conduite de condensat (14) avec le côté du tronçon collecteur de condensat (12.2) tourné vers la section transversale d'écoulement (18.1) libre de la barrière de condensat (12).

2. Barrière de condensat (12) selon la revendication 1,
**caractérisée en ce que**
le bac collecteur (12.4) est disposé sur le côté du tronçon collecteur de condensat (12.2) tourné vers la section transversale d'écoulement (18.1) libre de la barrière de condensat (12).

3. Barrière de condensat (12) selon la revendication 1 ou 2,
**caractérisée en ce que**
la cuvette de récupération (12.3) est disposée sur le côté du tronçon collecteur de condensat (12.2) éloigné de la section transversale d'écoulement (18.1) libre et à l'extérieur du canal d'écoulement (18) formé par le dispositif d'aspiration des buées (4), la barrière de condensat (12) et le canal d'air (6).

4. Barrière de condensat (12) selon la revendication 3,
**caractérisée en ce que**
le raccordement de conduite de condensat (14) est constitué de telle sorte que le condensat (16) quitte la cuvette de récupération (12.3) sous l'action de la force de gravité et pénètre dans le bac collecteur (12.4).

5. Barrière de condensat (12) selon l'une des revendications 1 à 4,
**caractérisée en ce que**
la cuvette de récupération (12.3) est en même temps constituée en tant que tronçon de retenue de la barrière de condensat (12) au moyen duquel la barrière de condensat (12) peut être retenue sur le dispositif d'aspiration des buées (4).

6. Barrière de condensat (12) selon au moins une des revendications 1 à 5,
**caractérisée en ce que**
le tronçon de jonction (12.1) présente, à son extrémité tournée vers le canal d'air (6), un biseau (12.6) qui se prolonge en pointe vers l'extrémité précitée et en direction de la paroi intérieure (12.1.2) de la barrière de condensat (12).

7. Barrière de condensat (12) selon au moins une des revendications 1 à 6,
**caractérisée en ce que**
le tronçon collecteur de condensat (12.2) présente, à son extrémité tournée vers le dispositif d'aspiration des buées (4), un biseau (12.5) qui se prolonge en pointe vers l'extrémité précitée et en direction de la paroi extérieure (12.1.1) de la barrière de condensat (12).

8. Barrière de condensat (12) selon au moins une des revendications 1 à 7,
**caractérisée en ce que**
le profilé périphérique de la barrière de condensat (12) présente une section transversale en L, la branche longitudinale du profilé étant formée essentiellement par le tronçon de jonction (12.1) à partir duquel s'étend radialement vers l'extérieur au moins une branche transversale qui est formée par la cuvette de récupération (12.3) ou par le bac collecteur (12.4).

9. Barrière de condensat (12) selon la revendication 8,
**caractérisée en ce que**
deux branches transversales formées par la cuvette de récupération (12.3) et par le bac collecteur (12.4) s'étendent de façon espacée de la branche longitudinale (12.1, 12.2), radialement vers l'extérieur et dans la direction longitudinale de la barrière de condensat (12).

10. Barrière de condensat (12) selon au moins une des revendications 1 à 9,
**caractérisée en ce que**
la barrière de condensat (12) est constituée en plusieurs parties.

11. Dispositif d'aspiration des buées (4) avec une barrière de condensat (12) selon la revendication 10, en référence à l'une des revendications 1 à 8,
**caractérisé en ce que**
le bac collecteur (12.4) fait partie intégrante du dispositif d'aspiration des buées (4) et le reste de la barrière de condensat (12) forme une unité constructive.
